(19) Europäisches Patentamt

European Patent Office

Office européen des brevets

(11) **EP 3 883 152 A1**

(12) **EUROPEAN PATENT APPLICATION**
published in accordance with Art. 153(4) EPC

(43) Date of publication:
**22.09.2021 Bulletin 2021/38**

(21) Application number: **19897382.8**

(22) Date of filing: **16.12.2019**

(51) Int Cl.:
*H04J 3/06* (2006.01)   *G06F 13/28* (2006.01)

(86) International application number:
**PCT/CN2019/125589**

(87) International publication number:
**WO 2020/119821 (18.06.2020 Gazette 2020/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.12.2018 CN 201811533615**

(71) Applicant: **ZTE Corporation
Shenzhen, Guangdong 518057 (CN)**

(72) Inventor: **CHEN, Sisi
Shenzhen, Guangdong 518057 (CN)**

(74) Representative: **Canzler & Bergmeier
Patentanwälte
Partnerschaft mbB
Friedrich-Ebert-Straße 84
85055 Ingolstadt (DE)**

(54) **DELAY JITTER COMPENSATION METHOD AND DEVICE, AND COMPUTER STORAGE MEDIUM**

(57) Disclosed by the embodiments of the present disclosure are a delay jitter compensation method and device and a computer storage medium, the method comprising: a time stamp compensation component determines a current delay jitter of a data link layer according to the latest recorded data accumulation amount and a fixed value of the data accumulation amount, the fixed value of the data accumulation amount indicating that no value of the data accumulation amount of the delay jitter exists in the data link layer; and the time stamp compensation component obtains an initial time stamp recorded in a protocol layer, compensates the initial time stamp according to the current delay jitter of the data link layer, and obtains a compensated time stamp, the compensated time stamp being the time stamp after the initial time stamp is compensated.

determining, by a time stamp compensation component, a current delay jitter of a data link layer according to the latest recorded data cumulant and a fixed value of data cumulant — 1010

acquiring, by the time stamp compensation component, an initial time stamp recorded in a protocol layer, and compensating the initial time stamp according to the current delay jitter of the data link layer to obtain a compensated time stamp — 1020

FIG. 1

**Description**

**CROSS-REFERENCE TO RELATED APPLICATION**

The present application claims priority from the Chinese patent application No. 201811533615.5 filed with the China Patent Office on December 14, 2018, the entire contents of which are incorporated in the present application by reference.

**TECHNICAL FIELD**

The present disclosure relates to the field of communication networks, and in particular, relates to a delay jitter compensation method and device, and a computer storage medium.

**BACKGROUND**

In recent years, 1588 time synchronization technology has been widely applied to communication networks. Abasic function of the IEEE 1588 Precision Clock Synchronization Protocol (1588 Protocol) for networked measurement and control Systems is to keep the most accurate clock in a distributed network to be synchronized with other clocks. The 1588 Protocol defines a Precision Time Protocol (PTP) which can synchronize time of clocks in sensors, actuators and other terminal devices in a standard Ethernet or other distributed bus systems using the multicast technology.

When the 1588 Protocol is applied, there is a relatively great dynamic jitter in path delay, which will affect calculation of the time offset, and when the path delay jitter reaches a certain degree, it is difficult to achieve time synchronization, and the accuracy of time synchronization is low.

**SUMMARY**

To solve at least one problem in the related art, the embodiments of the present disclosure provide a delay jitter compensation method and device, and a computer storage medium that solve the problem that the relatively great dynamic jitter in path delay affects calculation of the time offset.

In an embodiment of the present disclosure, there is provided a delay jitter compensation method, including:

determining, by a time stamp compensation component, a current delay jitter of a data link layer according to the latest recorded data cumulant and a fixed value of data cumulant, the fixed value of data cumulant indicating a value of data cumulant without any delay jitter in the data link layer; and

acquiring, by the time stamp compensation component, an initial time stamp recorded in a protocol layer, and compensating the initial time stamp according to the current delay jitter of the data link layer to obtain a compensated time stamp, the compensated time stamp being a time stamp obtained by compensating the initial time stamp.

In an embodiment of the present disclosure, there is provided a delay jitter compensation device, including:

a determination element configured to determine a current delay jitter of a data link layer according to the latest recorded data cumulant and a fixed value of data cumulant, the fixed value of data cumulant indicating a value of data cumulant without any delay jitter in the data link layer; and

a compensation element configured to acquire an initial time stamp recorded in a protocol layer, compensate the initial time stamp according to the current delay jitter of the data link layer to obtain a compensated time stamp, the compensated time stamp being a time stamp obtained by compensating the initial time stamp.

In an embodiment of the present disclosure, there is provided a delay jitter compensation device, including a network interface, a memory, and a processor;

the network interface is configured to enable connective communications between components;

the memory is configured to store a computer program operable on the processor; and

the processor is configured to, when executing the computer program, perform the delay jitter compensation method described above.

In an embodiment of the present disclosure, there is provided a computer storage medium having a computer program stored thereon which, when executed by at least one processor, causes the delay jitter compensation method described above to be implemented.

**BRIEF DESCRIPTION OF THE DRAWINGS**

FIG. 1 is a schematic flowchart illustrating implementation of a delay jitter compensation method according to an embodiment of the present disclosure;
FIG. 2a is a schematic flowchart illustrating implementation of another delay jitter compensation method according to an embodiment of the present disclosure;
FIG. 2b is a schematic flowchart illustrating implementation of another delay jitter compensation method according to an embodiment of the present disclosure;
FIG. 3 is a schematic diagram of a delay jitter compensation device according to an embodiment of the present disclosure;
FIG. 4 is a schematic diagram illustrating time synchronization between 1588 master and slave clock devices according to an embodiment of the present disclosure;
FIG. 5 is a schematic diagram of another delay jitter compensation device according to an embodiment of the present disclosure;
FIG. 6 is a schematic diagram of another delay jitter compensation device according to an embodiment of the present disclosure; and
FIG. 7 is a schematic diagram of a hardware structure of a delay jitter compensation device according to an embodiment of the present disclosure.

**DETAILED DESCRIPTION**

The present disclosure will be described below with reference to the drawings in conjunction with the embodiments of the present disclosure. The following embodiments are intended to illustrate the present disclosure, but are not intended to limit the scope of the present disclosure.

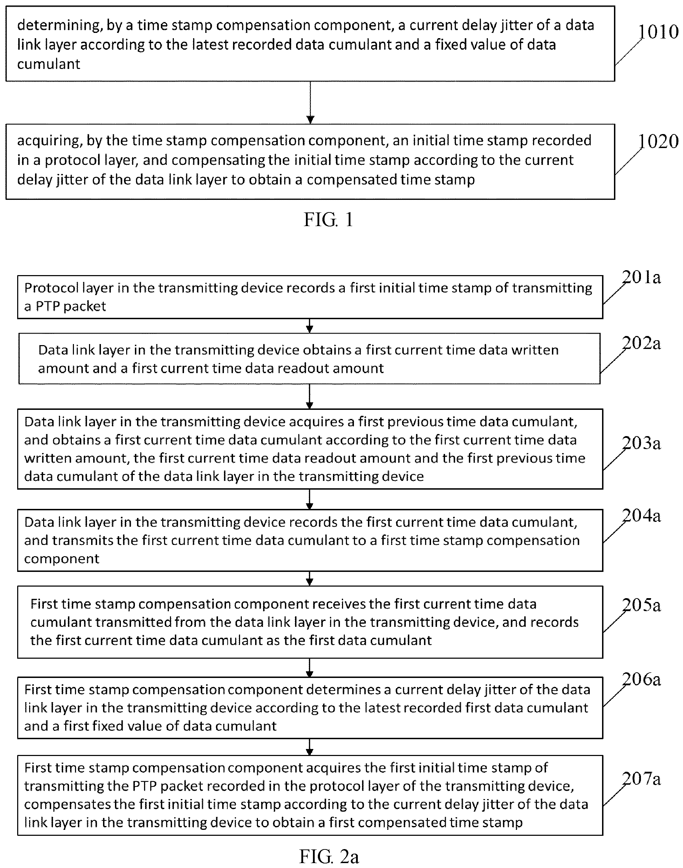

In an embodiment of the present disclosure, there is provided a delay jitter compensation method. FIG. 1 is a schematic flowchart illustrating an implementation of a delay jitter compensation method according to an embodiment of the present disclosure. The method, as shown in FIG. 1, includes steps 1010 to 1020.

At step 1010, a time stamp compensation component determines a current delay jitter of a data link layer according to the latest recorded data cumulant and a fixed value of data cumulant, the fixed value of data cumulant indicating a value of data cumulant without any delay jitter in the data link layer.

In an implementation, before determining the current delay jitter of the data link layer according to the latest recorded data cumulant and the fixed value of data cumulant, the time stamp compensation component receives a current time data cumulant transmitted from the data link layer, and records the current time data cumulant as the data cumulant.

In an implementation, the time stamp compensation component obtains, according to a plurality of data cumulants recorded in a current period, the maximum value and the minimum value of data cumulant in the current period. The period may be a preset time length; for example, the time length of the period may be 1 second, 2 seconds, or the like. The time stamp compensation component calculates a fixed value of data cumulant according to the maximum value and the minimum value of data cumulant in the current period, for example, calculates an average of the maximum value and the minimum value of data cumulant in the current period, so as to obtain a data cumulant without any delay jitter in the data link layer, i.e., the fixed value of data cumulant. The fixed values of data cumulant correspond to different periods, and the fixed values of data cumulant obtained in different periods may be the same or different. A first fixed value of data cumulant will be used for determining the delay jitter of the data link layer in a next period.

The fixed value of data cumulant obtained by the time stamp compensation component is a data cumulant without any delay jitter in the data link layer. The latest recorded data cumulant may have a delay jitter, and thus the time stamp compensation component may determine the current delay jitter of the data link layer according to the fixed value of data cumulant and the latest recorded data cumulant.

In an implementation, before the time stamp compensation component receives the current time data cumulant transmitted from the data link layer, the data link layer acquires a current time data written amount and a current time data readout amount, as well as a previous time data cumulant, and obtains the current time data cumulant from the current time data written amount, the current time data readout amount and the previous time data cumulant. The data written amount is calculated from data write enable of the data link layer and a data bus bit width of an input interface of the data link layer, and the data readout amount is calculated from data read enable of the data link layer, a data bus bit width of an output interface of the data link layer, and an expansion or contraction coefficient of a data stream rate from the input interface to the output interface of the data link layer at the current time.

In an implementation, after obtaining the current time data cumulant from the current time data written amount, the current time data readout amount and the previous time data cumulant, the data link layer transmits the current time data cumulant to the time stamp compensation component; and the time stamp compensation component receives the current time data cumulant and records the current time data cumulant as the data cumulant. The data link layer also records the current time data cumulant so that the latest recorded current time data cumulant may serve as the previous time data cumulant for a next time and be used for calculating the current time data cumulant of the next time, and the data link layer transmits the current time data cumulant to the time stamp compensation component so that the time stamp compensation component can determine the maximum value and the minimum value of data cumulant in the current period.

At step 1020, the time stamp compensation component acquires an initial time stamp recorded in a protocol layer, and compensates the initial time stamp according to the current delay jitter of the data link layer to obtain a compensated time stamp, the compensated time stamp being a time stamp obtained by compensating the initial time stamp.

In an implementation, the initial time stamp recorded by the protocol layer may be a time stamp of the protocol layer transmitting a PTP packet, or may be a time stamp of the protocol layer receiving a PTP packet, where the PTP packet is a data packet defined by the 1588 Protocol for indicating to complete time synchronization.

After obtaining the initial time stamp recorded by the protocol layer, the time stamp compensation component may compensate the initial time stamp according to the current delay jitter of the data link layer to obtain a time stamp after compensating the initial time stamp, i.e., the compensated time stamp. In the case that a delay jitter is currently present in the data link layer, if the initial time stamp recorded by the protocol layer is directly used for 1588 time synchronization calculation without compensation, the calculation of time offset will be affected; and if the initial time stamp recorded by the protocol layer is compensated and 1588 time synchronization calculation is performed using the compensated time stamp, the delay jitter can be automatically counteracted in the calculation of time offset so that the calculation of time offset is more accurate, and the precision of time synchronization is improved.

In the embodiment of the present disclosure, the time stamp compensation component determines the current delay jitter of the data link layer according to the latest recorded data cumulant and the fixed value of data cumulant, and compensates the initial time stamp according to the current delay jitter of the data link layer to obtain the compensated time stamp for 1588 time synchronization calculation, and in the calculation of time offset, the delay jitter can be automatically offset so that the calculation of time offset is more accurate, and the precision of time synchronization is improved.

In an embodiment of the present disclosure, there is provided another delay jitter compensation method. FIG. 2a is a schematic flowchart illustrating implementation of another delay jitter compensation method according to an embodiment of the present disclosure. As shown in FIG. 2a, the method is applied to a transmitting device and includes steps 201a to 207a.

At step 201a, a protocol layer in the transmitting device records a first initial time stamp of transmitting a PTP packet. The PTP packet is a data packet defined by the 1588 Protocol for indicating to complete time synchronization, and the first initial time stamp represents a time when the PTP packet is transmitted.

In an implementation, the protocol layer in the transmitting device records the first initial time stamp of transmitting the PTP packet as tx time, where the PTP packet is a data packet defined by the 1588 Protocol for indicating to complete time synchronization, and enters a data link layer in the transmitting device along with other data streams.

At step 202a, a data link layer in the transmitting device obtains a first current time data written amount and a first current time data readout amount.

In an implementation, the data link layer in the transmitting device is regarded as a virtual buffer, i.e., data is written into an input interface of the data link layer, and read out from an output interface of the data link layer. The input interface of the data link layer is a write clock. When data is written into the data link layer, a valid signal for the data is write enable en_w1, en_w1=1 or en_w1=0. When en_w1=1, it indicates that write operation is cached in the data link layer; and when en_w1=0, it indicates that no write operation is cached in the data link layer. A data bus bit width of the input interface is bit_w1, and the first current time data written amount is calculated, i.e., en_w1*bit_w1. The output interface of the data link layer is a read clock. When data is read from the data link layer, the valid signal for the data is read enable en_r1, the data bus bit width of the output interface is bit_r1, and the first current time data readout amount is calculated, i.e., en_r1*bit_r1*c_r_w1, where c_r_w1 indicates an expansion or contraction coefficient of a data stream rate from the input interface to the output interface of the data link layer at the current time, and the expansion or contraction coefficient indicates a ratio of the total amount of data after and before passing through the data link layer.

At step 203a, the data link layer in the transmitting device acquires a first previous time data cumulant, and obtains a first current time data cumulant according to the first current time data written amount, the first current time data readout amount and the first previous time data cumulant of the data link layer in the transmitting device.

In an implementation, if the data link layer in the transmitting device acquires a first previous time data cumulant bit_sum1, according to the first current time data written amount en_w1*bit_w1, the first current time data readout amount en_r1*bit_r1*c_r_w1 of the data link layer, the first current time data cumulant tx_bit_sum is calculated as bit_sum1+en_w1*bit_w1-en_r1*bit_r1*c_r_w1.

At step 204a, the data link layer in the transmitting device records the first current time data cumulant, and transmits the first current time data cumulant to a first time stamp compensation component.

In an implementation, after obtaining the first current time data cumulant, the data link layer in the transmitting device records the first current time data cumulant so that the latest recorded first current time data cumulant may serve as the first previous time data cumulant for a next time and be used for calculating the first current time data cumulant of the next time, and transmits the first current time data cumulant to a first time stamp compensation component so that first the time stamp compensation component can determine the maximum value and the minimum value of data cumulant in the current period.

At step 205a, the first time stamp compensation component receives the first current time data cumulant transmitted from the data link layer in the transmitting device, and records the first current time data cumulant as the first data cumulant.

At step 206a, the first time stamp compensation component determines a current delay jitter of the data link layer in the transmitting device according to the latest recorded first data cumulant and a first fixed value of data cumulant, the first fixed value of data cumulant indicating a data cumulant without any delay jitter in the transmitting device.

In an implementation, the first time stamp compensation component obtains, according to a plurality of data cumulants recorded in a current period, the maximum value and the minimum value of data cumulant in the current period. The time length of the period may be 1 second, 2 seconds, or the like. When the time length of the period is 2 seconds, the first time stamp compensation component obtains every 2 seconds, according to the data cumulants recorded in the current 2 seconds, the maximum value and the minimum value of data cumulant in the current 2 seconds.

In addition, the first time stamp compensation component may calculate the first fixed value of data cumulant according to the maximum value and the minimum value of data cumulant in the current period. For example, the first fixed value of data cumulant may be an average of the maximum value and the minimum value of data cumulant in the current period. The first time stamp compensation component may further calculate the first fixed value of data cumulant from the data cumulant recorded in the current period using an integration algorithm (an integration method in mathematics), the first fixed value of data cumulant indicating a data cumulant without any delay jitter in the transmitting device. The first fixed values of data cumulant correspond to different periods, and the first fixed values of data cumulant obtained in different periods may be the same or different. The first fixed value of data cumulant will be used in the next period for determining the delay jitter of the data link layer in the transmitting device.

In an implementation, after determining the first fixed value of data cumulant in the previous period, the first time stamp compensation component may determine a current delay jitter of the data link layer in the transmitting device according to the latest recorded first data cumulant and the first fixed value of data cumulant determined in the previous period. If the first fixed value of data cumulant is tx_constant_bit_sum (fixed waterline), then tx_bit_sum-tx_constant_bit_sum may represent a waterline jitter of the data link layer in the transmitting device, and (tx_bit_sum-tx_constant_bit_sum)*tx_compensate_unit may represent a delay jitter of the data link layer in the transmitting device, where tx _compensate_unit represents a unit for conversion from data cumulant to time. When (tx_bit_sum-tx_constant_bit_sum)*tx_compensate_unit is greater than 0, it indicates that the data link layer in the transmitting device has a delay jitter and the delay is increased; when (tx_bit_sum-tx_constant_bit_sum)*tx_compensate_unit is smaller than 0, it indicates that the data link layer in the transmitting device has a delay jitter, but the delay is reduced; and when (tx_bit_sum-tx_constant_bit_sum)*tx_compensate_unit equals to 0, it indicates that the data link layer in the transmitting device has no delay jitter and the delay is constant, i.e., the delay of the data link layer in the transmitting device has a fixed value.

At step 207a, the first time stamp compensation component acquires the first initial time stamp of transmitting the PTP packet recorded in the protocol layer of the transmitting device, compensates the first initial time stamp according to the current delay jitter of the data link layer in the transmitting device to obtain a first compensated time stamp, the first compensated time stamp being a time stamp obtained by compensating the first initial time stamp.

In an implementation, the first time stamp compensation component acquires the first initial time stamp of transmitting the PTP packet recorded in the protocol layer of the transmitting device as tx_time. When

(tx_bit_sum-tx_constant_bit_sum)*tx_compensate_unit is greater than 0, it indicates that the data writing rate is higher than the data reading rate in the data link layer of the transmitting device. In order to reduce the writing rate, i.e., make the data writing rate equal to the data reading rate, the first initial time stamp tx _time may be compensated according to the delay jitter of the data link layer in the transmitting device so that the first compensated time stamp (the time stamp obtained by compensating the first initial time stamp) is later than the first initial time stamp tx _time, and the first compensated time stamp is

tx_time+(tx_bit_sum-tx_constant_bit_sum)*tx_compensate_unit, where the first compensated time stamp is the actual time stamp used in the 1588 time synchronization calculation, and the delay jitter can be automatically counteracted when the first compensated time stamp is used for calculation of time offset.

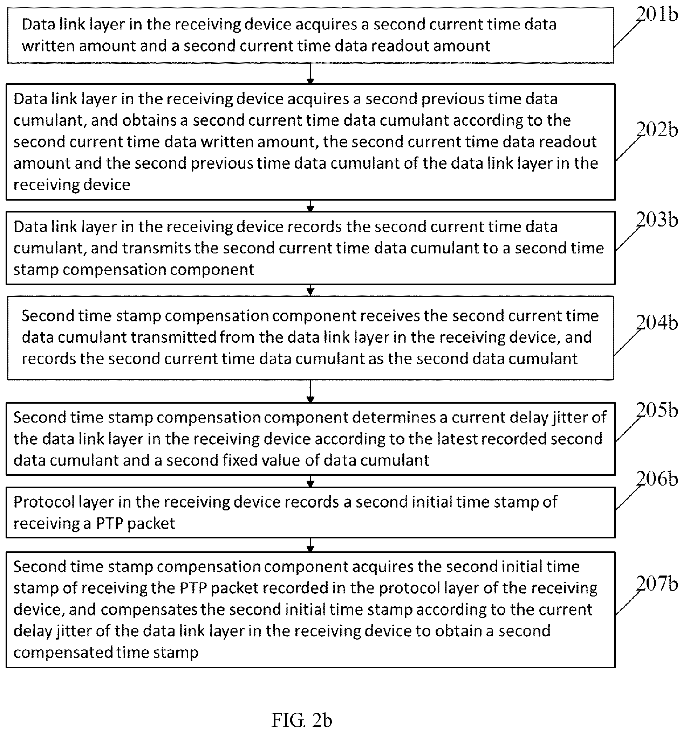

In an embodiment of the present disclosure, there is provided another delay jitter compensation method. FIG. 2b is a schematic flowchart illustrating implementation of another delay jitter compensation method according to an embodiment of the present disclosure. As shown in FIG. 2b, the method is applied to a receiving device and includes steps 201b to 207b.

At step 201b, a data link layer in the receiving device acquires a second current time data written amount and a second current time data readout amount.

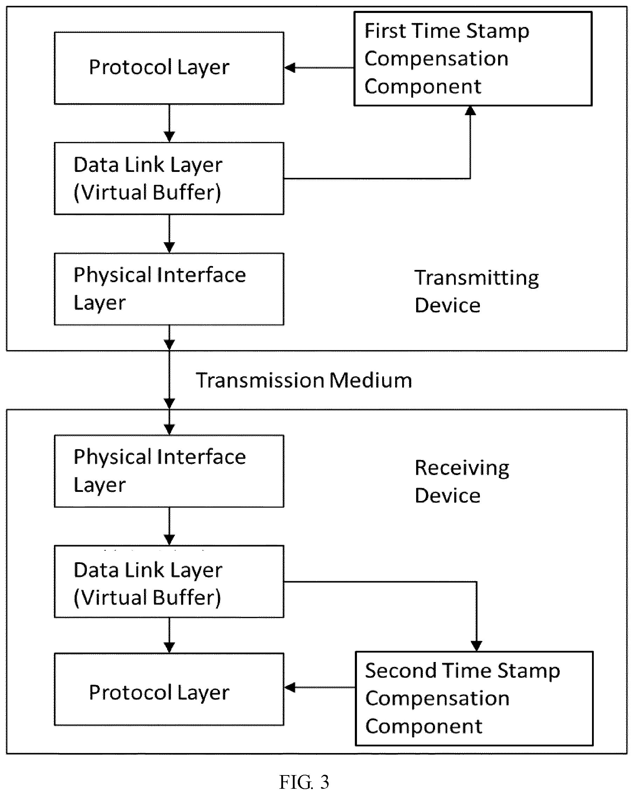

Here, as shown in FIG. 3, a data stream is transmitted to a transmission medium between the transmitting device and the receiving device after passing through the data link layer and a physical interface layer in the transmitting device, and then is transmitted to the data link layer of the receiving device by passing through the transmission medium and a physical interface layer of the receiving device, so that the data link layer in the receiving device can obtain the second current time data written amount and the second current time data readout amount.

In an implementation, the data link layer in the receiving device is regarded as a virtual buffer, i.e., data is written into an input interface of the data link layer, and read out from an output interface of the data link layer. The input interface of the data link layer is a write clock. When data is written into the data link layer, a valid signal for the data is write enable $en\_w2$, $en\_w2=1$ or $en\_w2=0$. When $en\_w2=1$, it indicates that write operation is cached in the data link layer; and when $en\_w2=0$, it indicates that no write operation is cached in the data link layer. A data bus bit width of the input interface is $bit\_w2$, and the second current time data written amount is calculated, i.e., $en\_w2*bit\_w2$. The output interface of the data link layer is a read clock. When data is read from the data link layer, a valid signal for the data is read enable $en\_r2$, the data bus bit width of the output interface is $bit\_r2$, and the second current time data readout amount is calculated, i.e., $en\_r2*bit\_r2*c\_r\_w2$, where $c\_r\_w2$ indicates an expansion or contraction coefficient of a data stream rate from the input interface to the output interface of the data link layer at the current time, and the expansion or contraction coefficient indicates a ratio of the total amount of data after and before passing through the data link layer.

At step 202b, the data link layer in the receiving device acquires a second previous time data cumulant, and obtains a second current time data cumulant according to the second current time data written amount, the second current time data readout amount and the second previous time data cumulant of the data link layer in the receiving device.

In an implementation, if the data link layer in the receiving device acquires a second previous time data cumulant $bit\_sum2$, according to the second current time data written amount $en\_w2*bit\_w2$, the second current time data readout amount $en\_r2*bit\_r2*c\_r\_w2$ of the data link layer, the second current time data cumulant $rx\_bit\_sum$ is calculated as $bit\_sum2+en\_w2*bit\_w2-en\_r2*bit\_r2*c\_r\_w2$.

At step 203b, the data link layer in the receiving device records the second current time data cumulant, and transmits the second current time data cumulant to a second time stamp compensation component.

In an implementation, after obtaining the second current time data cumulant, the data link layer in the receiving device records the second current time data cumulant so that the latest recorded second current time data cumulant may serve as the second previous time data cumulant for a next time and be used for calculating the second current time data cumulant of the next time, and transmits the second current time data cumulant to a second time stamp compensation component so that second the time stamp compensation component can determine the maximum value and the minimum value of data cumulant in the current period.

At step 204b, the second time stamp compensation component receives the second current time data cumulant transmitted from the data link layer in the receiving device, and records the second current time data cumulant as the second data cumulant.

At step 205b, the second time stamp compensation component determines a current delay jitter of the data link layer in the receiving device according to the latest recorded second data cumulant and a second fixed value of data cumulant, the second fixed value of data cumulant indicating a data cumulant without any delay jitter in the receiving device.

In an implementation, the second time stamp compensation component obtains, according to a plurality of data cumulants recorded in a current period, the maximum value and the minimum value of data cumulant in the current period. The time length of the period may be 1 second, 2 seconds, or the like. When the time length of the period is 2 seconds, the second time stamp compensation component obtains every 2 seconds, according to the data cumulants recorded in the current 2 seconds, the maximum value and the minimum value of data cumulant in the current 2 seconds.

In addition, the second time stamp compensation component may calculate the second fixed value of data cumulant according to the maximum value and the minimum value of data cumulant in the current period. For example, the second fixed value of data cumulant may be an average of the maximum value and the minimum value of data cumulant in the current period. The second time stamp compensation component may also calculate the second fixed value of data cumulant from the data cumulant recorded in the current period using an integration algorithm (an integration method in mathematics), the second fixed value of data cumulant indicating a data cumulant without any delay jitter in the receiving device. The second fixed values of data cumulant correspond to different periods, and the second fixed values of data cumulant obtained in different periods may be the same or different. The second fixed value of data cumulant will be used in the next period for determining the delay jitter of the data link layer in the receiving device.

In an implementation, after determining the second fixed value of data cumulant in the previous period, the second time stamp compensation component may determine a current delay jitter of the data link layer in the receiving device according to the latest recorded second data cumulant and the second fixed value of data cumulant determined in the previous period. If the second fixed value of data cumulant is rx_constant_bit_sum (fixed waterline), then

rx_bit_sum-rx_constant_bit_sum may represent a waterline jitter of the data link layer in the receiving device, and (rx_bit_sum-rx_constant_bit_sum)*rx_compensate_unit may represent a delay jitter of the data link layer in the receiving device, where rx_compensate_unit represents a unit for conversion from data cumulant to time. When (rx_bit_sum-rx_constant_bit_sum)*rx_compensate_unit is greater than 0, it indicates that the data link layer in the receiving device has a delay jitter and the delay is increased; when (rx_bit_sum-rx_constant_bit_sum)*rx_compensate_unit is smaller than 0, it indicates that the data link layer in the receiving device has a delay jitter but the delay is reduced; and when (rx_bit_sum-rx_constant_bit_sum)*rx_compensate_unit equals to 0, it indicates that the data link layer in the receiving device has no delay jitter and the delay is constant, i.e., the delay of the data link layer in the receiving device has a fixed value.

At step 206b, a protocol layer in the receiving device records a second initial time stamp of receiving a PTP packet, the second initial time stamp representing a time when the PTP packet is received.

In an implementation, after being transmitted from the protocol layer of the transmitting device, the PTP packet is transmitted to a transmission medium between the transmitting device and the receiving device by passing through the data link layer and a physical interface layer in the transmitting device, and then is transmitted to the protocol layer of the receiving device by passing through the transmission medium, a physical interface layer of the receiving device and the data link layer of the receiving device, thereby the protocol layer of the receiving device receives the PTP packet. Here, the second initial time stamp of receiving the PTP packet recorded in the protocol layer of the receiving device is rx_time.

At step 207b, the second time stamp compensation component acquires the second initial time stamp of receiving the PTP packet recorded in the protocol layer of the receiving device, and compensates the second initial time stamp according to the current delay jitter of the data link layer in the receiving device to obtain a second compensated time stamp, the second compensated time stamp being a time stamp obtained by compensating the second initial time stamp.

In an implementation, the second time stamp compensation component acquires the second initial time stamp, rx_tim, of receiving the PTP packet recorded in the protocol layer of the receiving device. When

(rx_bit_sum-rx_constant_bit_sum)*rx_compensate_unit is greater than 0, it indicates that the data reading rate is higher than the data writing rate in the data link layer of the receiving device. In order to reduce the data reading rate, i.e., make the data writing rate equal to the data reading rate, the second initial time stamp rx_time may be compensated according to the delay jitter of the data link layer in the receiving device so that the second compensated time stamp (the time stamp obtained by compensating the second initial time stamp) is earlier than the second initial time stamp tx time, and the second compensated time stamp is rx_time-(rx_bit_sum-rx_constant_bit_sum)*rx_compensate_unit, where the second compensated time stamp is the actual time stamp used in the 1588 time synchronization calculation, and the delay jitter can be automatically counteracted when the second compensated time stamp is used for calculation of time offset.

In an implementation, in the 1588 Protocol time synchronization calculation, if the first initial time stamp and the second initial time stamp are used for calculation of the path delay from the protocol layer in the transmitting device to the protocol layer in the receiving device, the path delay rx_time-tx_time=tx_delay-constant+tx_delay_jitter+rx_delay-constant+rx_delay_jit ter, where tx_delay_constant is a delay constant part of the transmitting device, i.e., a fixed value of delay of the data link layer in the transmitting device, tx_delayjitter is a delay jitter part of the transmitting device, rx_delay_constant is a delay constant part of the receiving device, i.e., a fixed value of delay of the data link layer in the receiving device, and rx_delayjitter is a delay jitter part of the receiving device. According to the 1588 Protocol, tx_delay_jittert and rx_delayjitter will affect the calculation of time offset, thereby impairing the accuracy of time synchronization.

If the first compensated time stamp and the second compensated time stamp are adopted for calculation, the calculation equation of the path delay is as shown in equation (1):

$$\{rx\_time-(rx\_bit\_sum-rx\_constant\_bit\_sum)*rx\_compensate\_unit\}-$$
$$\{tx\_time+(tx\_bit\_sum-tx\_constant\_bit\_sum)*tx\_compensate\_unit\}$$
$$=rx\_time-tx\_time-$$
$$(rx\_bit\_sum-rx\_constant\_bit\_sum)*rx\_compensate\_unit-$$
$$(tx\_bit\_sum-tx\_constant\_bit\_sum)*tx\_compensate\_unit$$
$$=tx\_delay\_constant+tx\_delay\_jitter+$$
$$rx\_delay\_constant+rx\_delay\_jitter-$$
$$(rx\_bit\_sum-rx\_constant\_bit\_sum)*rx\_compensate\_unit-$$
$$(tx\_bit\_sum-tx\_constant\_bit\_sum)*tx\_compensate\_unit$$
$$=tx\_delay\_constant+rx\_delay\_constant+$$
$$tx\_delay\_jitter-(tx\_bit\_sum-tx\_constant\_bit\_sum)*tx\_compensate\_unit+$$
$$rx\_delay\_jitter-(rx\_bit\_sum-rx\_constant\_bit\_sum)*rx\_compensate\_unit$$
$$=tx\_delay\_constant+rx\_delay\_constant$$
$$(1).$$

As can be seen from equation (1), when

(tx_bit_sum-tx_constant_bit_sum)*tx_compensate_unit is positive, it indicates that the transmitting device has a delay jitter and the delay is increased, i.e.,
tx_delayjitter is positive, and when
(tx_bit_sum-tx_constant_bit_sum)*tx_compensate_unit is negative, it indicates that the transmitting device has a delay jitter but the delay is reduced, i.e., tx_delayjitter is negative, and by subtracting tx_delayjitter from (tx_bit_sum-tx_constant_bit_sum)*tx_compensate_unit, the delay jitter of the transmitting device can be dynamically counteracted. When (rx_bit_sum-rx_constant_bit_sum)*rx_compensate_unit is positive, it indicates that the receiving device has a delay jitter and the delay is increased, i.e., rx_delayjitter is positive, and when (rx_bit_sum-rx_constant_bit_sum)*rx_compensate_unit is negative, it indicates that the receiving device has a delay jitter but the delay is reduced, i.e., rx_delay_jitter is negative, and by subtracting rx_delay_jitter from (rx_bit_sum-rx_constant_bit_sum)*rx_compensate_unit, the delay jitter of the receiving device can be dynamically counteracted. Therefore, by using the compensated time stamps for calculation of time offset, the delay jitter can be automatically counteracted, so that the path delay in the transmitting device and the receiving device tends to be a fixed value, thereby increasing the accuracy of time synchronization.

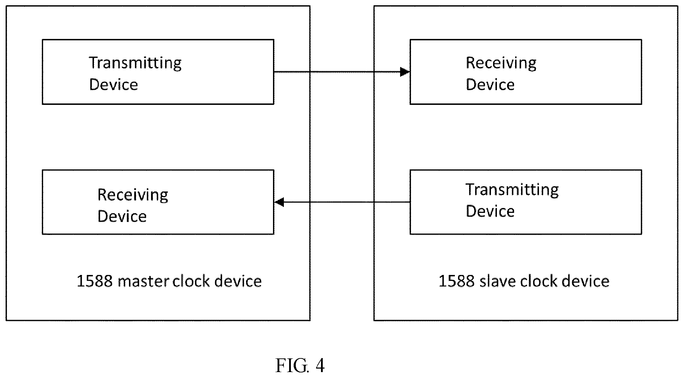

As shown in FIG. 4, in the 1588 Protocol, a 1588 master clock device includes a transmitting device and a receiving device, and a 1588 slave clock device also includes a transmitting device and a receiving device. In this embodiment, the transmitting device in the 1588 master clock device performs the delay jitter compensation method as described above to obtain a first compensated time stamp; the receiving device in the 1588 slave clock device performs the delay jitter compensation method as described above to obtain a second compensated time stamp; the transmitting device in the 1588 slave clock device performs the delay jitter compensation method as described above to obtain a third compensated time stamp; and the receiving device in the 1588 master clock device performs the delay jitter compensation method as described above to obtain a fourth compensated time stamp. According to a time synchronization mechanism of the 1588 Protocol, the first, second, third and fourth compensated time stamps are used for time synchronization of the master and slave clock devices so that the path delay in the transmitting devices and the receiving devices tends to be a fixed value, thereby increasing the accuracy in time synchronization of the master and slave clock devices.

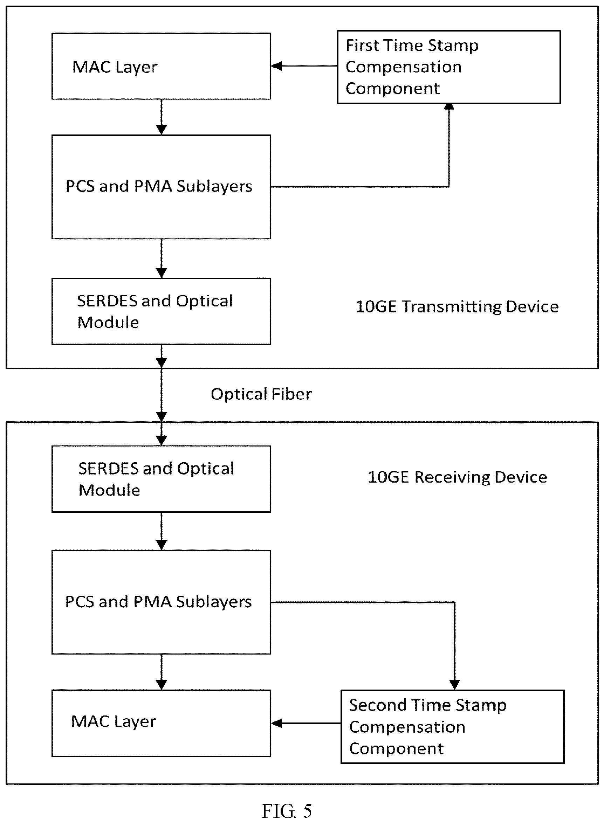

Taking 10 Gigabit Ethernet (10GE) as an example, as shown in FIG. 5, a Media Access Control (MAC) layer of Ethernet is selected as the protocol layer in the embodiments of the present disclosure, a Physical Coding Sublayer (PCS) and a Physical Medium Attachment (PMA) Sublayer of Ethernet are selected as the data link layer in the embodiments of the present disclosure, and a SERializer/DESerializer (SERDES) and an optical module are selected as the physical interface layer in the embodiments of the present disclosure.

The MAC layer in the 10GE transmitting device records a first initial time stamp of transmitting a PTP packet.

The PCS and PMA sublayers transmit Ethernet service data to obtain a first previous time data cumulant, and obtain a first current time data cumulant from a first current time data written amount, a first current time data readout amount and the first previous time data cumulant. The first time stamp compensation component obtains the first current time data cumulant transmitted from the PCS and PMA sublayers in the 10GE transmitting device, records the first current time data cumulant as a first data cumulant, determines a current delay jitter of the PCS and PMA sublayers in the 10GE transmitting device according to the latest recorded first data cumulant and a first fixed value of data cumulant, and compensates the first initial time stamp of transmitting the PTP packet recorded by the MAC layer according to the current delay jitter to obtain a first compensated time stamp. The SERDES and the optical module in the 10GE transmitting device convert logic digital signals transmitted by the PCS and PMA sublayers into optical signals, and then transmit the optical signals to an optical fiber. The optical fiber transmits the optical signals to the SERDES and the optical module in the 10GE receiving device.

The SERDES and the optical module in the 10GE receiving device covert the optical signals transmitted from the optical fiber into logic digital signals, and then transmit the logic digital signals to the PCS and PMA sublayers in the 10GE receiving device. The PCS and PMA sublayers acquire a second previous time data cumulant, and obtain a second current time data cumulant from a second current time data written amount, a second current time data readout amount and the second previous time data cumulant. The second time stamp compensation component obtains the second current time data cumulant transmitted from the PCS and PMA sublayers in the 10GE receiving device, records the second current time data cumulant as a second data cumulant, and determines a current delay jitter of the PCS and PMA sublayers in the 10GE receiving device according to the latest recorded second data cumulant and a second fixed value of data cumulant. The MAC layer in the 10GE receiving device records a second initial time stamp of receiving a PTP packet. The second time stamp compensation component acquires the second initial time stamp, and compensates the second initial time stamp according to the current delay jitter of the PCS and PMA sublayers in the 10GE receiving device to obtain a second compensated time stamp. Therefore, by using the compensated time stamps for calculation of time offset, the delay jitter can be automatically counteracted, so that the path delay in the 10GE transmitting device and the 10GE receiving device tends to be a fixed value, thereby increasing the accuracy of time synchronization.

The above description of multiple layers may be understood as logical entities located at the respective layers.

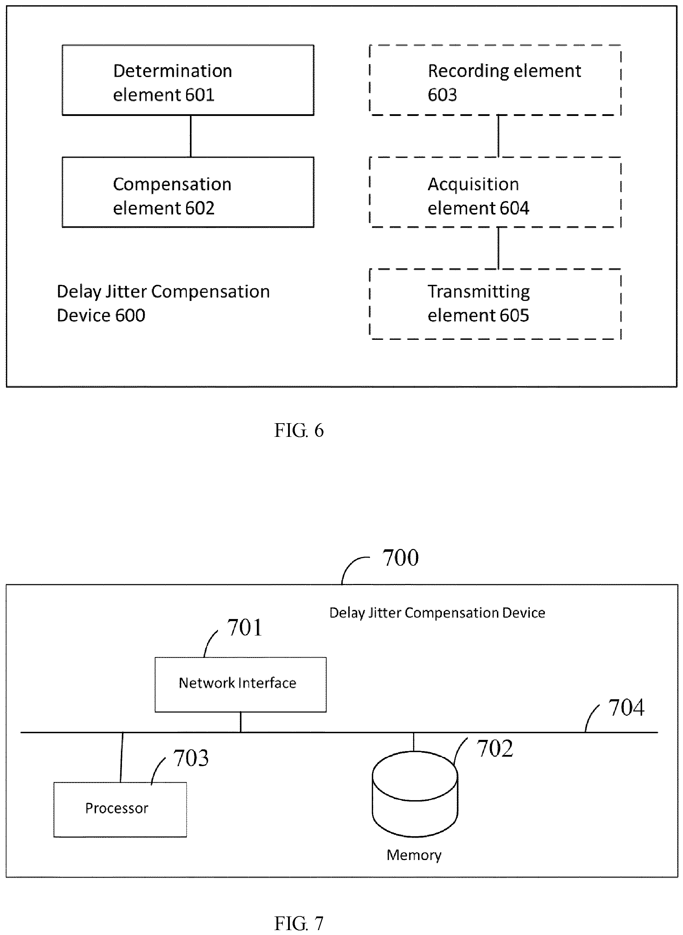

In an embodiment of the present disclosure, there is provided a delay jitter compensation device. FIG. 6 is a schematic diagram of a delay jitter compensation structure according to an embodiment of the present disclosure. As shown in FIG. 6, the delay jitter compensation device 600 includes: a determination element 601 and a compensation element 602.

The determination element 601 is configured to determine a current delay jitter of a data link layer according to the latest recorded data cumulant and a fixed value of data cumulant, the fixed value of data cumulant indicating a data cumulant without any delay jitter in the data link layer.

The compensation element 602 is configured to acquire an initial time stamp recorded in a protocol layer, compensate the initial time stamp according to the current delay jitter of the data link layer to obtain a compensated time stamp, the compensated time stamp being a time stamp obtained by compensating the initial time stamp.

In an implementation, the device 600 may further include:
a recording element 603 configured to receive a current time data cumulant transmitted from the data link layer, and record the current time data cumulant as the data cumulant.

In an implementation, the recording element 603 is further configured to, obtain, according to a plurality of data cumulants recorded in a current period, the maximum value and the minimum value of data cumulant in the current period; and calculate a fixed value of data cumulant according to the maximum value and the minimum value of data cumulant in the current period.

Here, the determination element 601, the compensation element 602, and the recording element 603 may be provided in the time stamp compensation component as described above.

In an implementation, the device 600 may further include:
an acquisition element 604 configured to acquire, by a data link layer, a current time data written amount and a current time data readout amount; acquire, by the data link layer, a previous time data cumulant; and obtain, by the data link layer, the current time data cumulant from the current time data written amount, the current time data readout amount and the previous time data cumulant.

In an implementation, the device 600 may further include:
a transmitting element 605 configured to transmit, by the data link layer, the current time data cumulant to the time stamp compensation component.

Here, the acquisition element 604 and the transmitting element 605 may be provided in the data link layer as described above.

In an implementation, the delay jitter compensation device is disposed in a transmitting device and /or a receiving device.

The multiple components/elements in the embodiments of the present disclosure may be integrated in one processing unit, or each component/element may exist alone physically, or two or more components/elements may be integrated in one component/element. The integrated component/element as described above may be implemented in the form of hardware, or in the form of a software functional module.

The integrated component/element, if implemented in the form of a software functional module and sold or used as a stand-alone product, may be stored in a computer readable storage medium. The embodiments of the present disclosure may be embodied in the form of a software product, which may be stored in a storage medium, and may include a plurality of instructions for causing a computer device (which may be a personal computer, a server, or a network device, etc.) or processor to perform all or part of the steps of the method described in the embodiments. The storage medium mentioned above includes: a Universal Serial Bus flash disk (usb disk), a removable hard disk, a Read Only Memory (ROM), a Random Access Memory (RAM), a magnetic disk, an optical disk, or any other medium capable of storing program codes.

In view of this, in an embodiment of the present disclosure, there is provided a computer storage medium storing a computer program thereon which when executed by at least one processor, cause any method of the above embodiments to be implemented.

Referring to FIG. 7, a hardware structure of a delay jitter compensation device 700 provided in an embodiment of the present disclosure is shown, and includes: a network interface 701, a memory 702, and a processor 703; and a bus system 704 for coupling the plurality of components. The bus system 704 is configured to enable connective communications between these components. The bus system 704 includes, in addition to a data bus, a power bus, a control bus, and a status signal bus. The various busses are shown jointly in FIG. 7 as the bus system 704. The network interface 701 is configured to receive and transmit signals during information transmission between the network interface 701 and other external network elements;

the memory 702 is configured to store a computer program operable on the processor 703; and
the processor 703 is configured to, when executing the computer program, perform the following operations:

determining, by a time stamp compensation component, a current delay jitter of a data link layer according to the latest recorded data cumulant and a fixed value of data cumulant, the fixed value of data cumulant indicating a data cumulant without any delay jitter in the data link layer;
acquiring, by the time stamp compensation component, an initial time stamp recorded in a protocol layer, and compensating the initial time stamp according to the current delay jitter of the data link layer to obtain a compensated time stamp, the compensated time stamp being a time stamp obtained by compensating the initial time stamp.

The processor 703 is further configured to, when executing the computer program, perform the following operations:
receiving, by the time stamp compensation component, a current time data cumulant transmitted from the data link layer, and recording the current time data cumulant as the data cumulant.

The processor 703 is further configured to, when executing the computer program, perform the following operations:

obtaining, by the time stamp compensation component according to a plurality of data cumulants recorded in a current period, the maximum value and the minimum value of data cumulant in the current period; and
obtaining, by the time stamp compensation component, a fixed value of data cumulant according to the maximum value and the minimum value of data cumulant in the current period.

The processor 703 is further configured to, when executing the computer program, perform the following operations:

acquiring, by the data link layer, a current time data written amount and a current time data readout amount; and
acquiring, by the data link layer, a previous time data cumulant, and obtaining the current time data cumulant from the current time data written amount, the current time data readout amount and the previous time data cumulant.

The processor 703 is further configured to, when executing the computer program, perform the following operations:

transmitting, by the data link layer, the current time data cumulant to the time stamp compensation component; and
recording, by the time stamp compensation component, the current time data cumulant of the data link layer as the data cumulant.

It will be appreciated that the memory 702 in the embodiment of the present disclosure may be either a volatile memory or a nonvolatile memory, or may include both volatile and nonvolatile memories. The nonvolatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM) used as an external cache. By way of example, but not limitation, many forms of RAMs are available, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous SDRAM (ESDRAM), a Synchronous Link DRAM (SLDRAM), and a Direct Rambus RAM (DRRAM). The memory 702 described herein is intended to include these and any other suitable types of memory.

The processor 703 may be an integrated circuit chip having signal processing capabilities. In an implementation, many steps of the method described above may be implemented by integrated logic circuits of hardware or instructions in the form of software in the processor 703. The processor 703 may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components that may implement or perform the methods, steps, and logic blocks in embodiments of the present disclosure. The general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium such as an RAM, a flash, an ROM, a PROM or EPROM, a register, or the like. The storage medium is located in the memory 702, and the processor 703 reads information from the memory 702 and completes the above methods in combination with hardware thereof.

Reference throughout the specification to "an embodiment" means that a particular feature, structure, or characteristic described in connection with the embodiment is included in at least one embodiment of the present disclosure. Thus, the appearances of the phrases "in an embodiment" in various places throughout this specification are not necessarily all referring to the same embodiment. Furthermore, these particular features, structures, or characteristics may be combined in any suitable manner in one or more embodiments. In various embodiments of the present disclosure, the sequence numbers of the above-mentioned processes do not imply an order of execution, and the order of execution of the processes should be determined by their functions and inherent logic, and should not form any limitation to the implementation process of the embodiments of the present disclosure. The sequence numbers in the embodiments of the present disclosure are for description only and do not represent preferences.

In the embodiments, the term "including", "comprising" or any variant thereof used herein means to be non-exclusive so that a process, method, item or device including a series of elements includes not only said elements, but also other elements not explicitly listed, or inherent elements of such process, method, item or device. In the absence of more limitations, an element defined by "comprising a ..." do not exclude the existence of additional identical elements in the process, method, item or device including the element.

In the embodiments provided in the present application, the disclosed method and device may be implemented in other manners. The terminals described above are merely illustrative. For example, the division of the components/elements is only one type of logical functional division, and other division modes may be adopted in practical implementations. For example, multiple elements or components may be combined or integrated into another system, or some features may be omitted, or not executed. In addition, the shown or discussed mutual coupling or direct coupling or communicative connection of various components may be indirect coupling or communicative connection via some interfaces, devices or elements, and may be in an electrical, mechanical or other form.

**Claims**

1. A delay jitter compensation method, comprising:

   determining, by a time stamp compensation component, a current delay jitter of a data link layer according to a latest recorded data cumulant and a fixed value of data cumulant, the fixed value of data cumulant indicating a value of data cumulant without any delay jitter in the data link layer; and
   acquiring, by the time stamp compensation component, an initial time stamp recorded in a protocol layer, and compensating the initial time stamp according to the current delay jitter of the data link layer to obtain a compensated time stamp, the compensated time stamp being a time stamp obtained by compensating the initial time stamp.

2. The method according to claim 1, wherein before determining, by the time stamp compensation component, the current delay jitter of the data link layer according to the latest recorded data cumulant and the fixed value of data cumulant, the method further comprises:
receiving, by the time stamp compensation component, a current time data cumulant transmitted from the data link layer, and recording the current time data cumulant as the latest recorded data cumulant.

3.  The method according to claim 2, wherein before recording the current time data cumulant as the latest recorded data cumulant, the method further comprises:

> obtaining, by the time stamp compensation component according to a plurality of data cumulants recorded in a current period, a maximum value and a minimum value of data cumulant in the current period; and
> obtaining, by the time stamp compensation component, the fixed value of data cumulant according to the maximum value and the minimum value of data cumulant in the current period.

4.  The method according to claim 2, wherein before receiving, by the time stamp compensation component, the current time data cumulant transmitted from the data link layer, the method further comprises:

> acquiring, by the data link layer, a current time data written amount and a current time data readout amount;
> acquiring, by the data link layer, a previous time data cumulant;
> obtaining, by the data link layer, the current time data cumulant from the current time data written amount, the current time data readout amount and the previous time data cumulant; and
> after obtaining the current time data cumulant from the current time data written amount, the current time data readout amount and the previous time data cumulant, the method further comprises:
> transmitting, by the data link layer, the current time data cumulant to the time stamp compensation component.

5.  The method according to claim 4, wherein the obtaining, by the data link layer, the current time data cumulant from the current time data written amount, the current time data readout amount and the previous time data cumulant comprises:

> calculating the current time data written amount from a data bus bit width of an input interface and write enable, and calculating the current time data readout amount from a data bus bit width of an output interface, read enable, and an expansion or contraction coefficient of a data stream rate from the input interface to the output interface of the data link layer at the current time; and
> subtracting the current time data readout amount from a sum of the previous time data cumulant and the current time data written amount to obtain the current time data cumulant.

6.  A delay jitter compensation device, comprising:

> a determination element configured to determine a current delay jitter of a data link layer according to a latest recorded data cumulant and a fixed value of data cumulant, the fixed value of data cumulant indicating a value of data cumulant without any delay jitter in the data link layer; and
> a compensation element configured to acquire an initial time stamp recorded in a protocol layer, compensate the initial time stamp according to the current delay jitter of the data link layer to obtain a compensated time stamp, the compensated time stamp being a time stamp obtained by compensating the initial time stamp.

7.  The device according to claim 6, further comprising:
a recording element configured to receive a current time data cumulant transmitted from the data link layer, and record the current time data cumulant as the latest recorded data cumulant.

8.  The device according to claim 7, applied to at least one of a transmitting device and a receiving device, wherein the recording element is further configured to obtain, according to a plurality of data cumulants recorded in a current period, a maximum value and a minimum value of data cumulant in the current period; and calculate the fixed value of data cumulant according to the maximum value and the minimum value of data cumulant in the current period.

9.  A delay jitter compensation device, comprising a network interface, a memory, and a processor; wherein

> the network interface is configured to enable connective communications between components;
> the memory is configured to store a computer program operable on the processor; and
> the processor is configured to, when executing the computer program, perform the method according to any one of claims 1 to 5.

10. A computer storage medium having a computer program stored thereon which, when executed by at least one processor, causes the method according to any one of claim 1 to 5 to be implemented.

| determining, by a time stamp compensation component, a current delay jitter of a data link layer according to the latest recorded data cumulant and a fixed value of data cumulant | 1010 |

↓

| acquiring, by the time stamp compensation component, an initial time stamp recorded in a protocol layer, and compensating the initial time stamp according to the current delay jitter of the data link layer to obtain a compensated time stamp | 1020 |

FIG. 1

| Protocol layer in the transmitting device records a first initial time stamp of transmitting a PTP packet | 201a |

↓

| Data link layer in the transmitting device obtains a first current time data written amount and a first current time data readout amount | 202a |

↓

| Data link layer in the transmitting device acquires a first previous time data cumulant, and obtains a first current time data cumulant according to the first current time data written amount, the first current time data readout amount and the first previous time data cumulant of the data link layer in the transmitting device | 203a |

↓

| Data link layer in the transmitting device records the first current time data cumulant, and transmits the first current time data cumulant to a first time stamp compensation component | 204a |

↓

| First time stamp compensation component receives the first current time data cumulant transmitted from the data link layer in the transmitting device, and records the first current time data cumulant as the first data cumulant | 205a |

↓

| First time stamp compensation component determines a current delay jitter of the data link layer in the transmitting device according to the latest recorded first data cumulant and a first fixed value of data cumulant | 206a |

↓

| First time stamp compensation component acquires the first initial time stamp of transmitting the PTP packet recorded in the protocol layer of the transmitting device, compensates the first initial time stamp according to the current delay jitter of the data link layer in the transmitting device to obtain a first compensated time stamp | 207a |

FIG. 2a

Data link layer in the receiving device acquires a second current time data written amount and a second current time data readout amount — 201b

Data link layer in the receiving device acquires a second previous time data cumulant, and obtains a second current time data cumulant according to the second current time data written amount, the second current time data readout amount and the second previous time data cumulant of the data link layer in the receiving device — 202b

Data link layer in the receiving device records the second current time data cumulant, and transmits the second current time data cumulant to a second time stamp compensation component — 203b

Second time stamp compensation component receives the second current time data cumulant transmitted from the data link layer in the receiving device, and records the second current time data cumulant as the second data cumulant — 204b

Second time stamp compensation component determines a current delay jitter of the data link layer in the receiving device according to the latest recorded second data cumulant and a second fixed value of data cumulant — 205b

Protocol layer in the receiving device records a second initial time stamp of receiving a PTP packet — 206b

Second time stamp compensation component acquires the second initial time stamp of receiving the PTP packet recorded in the protocol layer of the receiving device, and compensates the second initial time stamp according to the current delay jitter of the data link layer in the receiving device to obtain a second compensated time stamp — 207b

FIG. 2b

FIG. 3

FIG. 4

```
┌─────────────────────────────────────────────────────────────────┐
│                                      ┌─────────────────────┐     │
│   ┌──────────────────────┐           │ First Time Stamp    │     │
│   │                      │◄──────────│ Compensation        │     │
│   │   MAC Layer          │           │ Component           │     │
│   │                      │           └─────────────────────┘     │
│   └──────────────────────┘                    ▲                  │
│              │                                 │                  │
│              ▼                                 │                  │
│   ┌──────────────────────┐                     │                  │
│   │                      │─────────────────────┘                  │
│   │  PCS and PMA Sublayers│                                       │
│   │                      │                                       │
│   └──────────────────────┘                                       │
│              │                                                    │
│              ▼                                                    │
│   ┌──────────────────────┐                                       │
│   │ SERDES and Optical   │          10GE Transmitting Device     │
│   │ Module               │                                       │
│   └──────────────────────┘                                       │
└──────────────┼──────────────────────────────────────────────────┘
               │
          Optical Fiber
               │
┌──────────────┼──────────────────────────────────────────────────┐
│              ▼                                                    │
│   ┌──────────────────────┐          10GE Receiving Device        │
│   │ SERDES and Optical   │                                       │
│   │ Module               │                                       │
│   └──────────────────────┘                                       │
│              │                                                    │
│              ▼                                                    │
│   ┌──────────────────────┐                                       │
│   │                      │─────────────────────┐                 │
│   │  PCS and PMA Sublayers│                     │                 │
│   │                      │                     │                 │
│   └──────────────────────┘                     ▼                 │
│              │                      ┌─────────────────────┐      │
│              ▼                      │ Second Time Stamp   │      │
│   ┌──────────────────────┐          │ Compensation        │      │
│   │                      │◄──────────│ Component           │      │
│   │   MAC Layer          │          └─────────────────────┘      │
│   └──────────────────────┘                                       │
└───────────────────────────────────────────────────────────────────┘
```

FIG. 5

FIG. 6

FIG. 7

## INTERNATIONAL SEARCH REPORT

| | |
|---|---|
| International application No. | |
| | **PCT/CN2019/125589** |

| A. CLASSIFICATION OF SUBJECT MATTER |
|---|
| H04J 3/06(2006.01)i;  G06F 13/28(2006.01)i |
| According to International Patent Classification (IPC) or to both national classification and IPC |

| B. FIELDS SEARCHED |
|---|
| Minimum documentation searched (classification system followed by classification symbols) |
| H04J; G06F |
| Documentation searched other than minimum documentation to the extent that such documents are included in the fields searched |
| |
| Electronic data base consulted during the international search (name of data base and, where practicable, search terms used) |
| USTXT; EPTXT; WOTXT; CNTXT; CNABS; VEN; CNKI: 路径, 延迟, 时延, 延时, 迟延, 抖动, 时戳, 时间戳, 修正, 补偿, 精密, 精确, 时间协议, 时钟同步协议, 数据, 累积, 积累, 暂存, 储存, 存储, 缓冲, 缓存, 字节数, 字节量, 数, 量, 数据量, 比特数, 1588协议, routing, path, delay, time, stamp, indicia, compensat+, correct??, precis??? clock synchronization protocol, precis??? time protocol, data, buffer??, amount, quantum, quantity, number, 1588 protocol |

| C. DOCUMENTS CONSIDERED TO BE RELEVANT | | |
|---|---|---|
| Category* | Citation of document, with indication, where appropriate, of the relevant passages | Relevant to claim No. |
| A | CN 102244572 A (ZTE CORPORATION) 16 November 2011 (2011-11-16) description, paragraphs [0054]-[0059], figure 3 | 1-10 |
| A | CN 101351780 A (PANASONIC CORPORATION) 21 January 2009 (2009-01-21) description, page 13, line 6 to page 14, line 27, figure 1 | 1-10 |
| A | CN 101529404 A (NOKIA CORPORATION) 09 September 2009 (2009-09-09) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 January 2020** | **12 March 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/125589**

| Patent document cited in search report | | | Publication date (day/month/year) | Patent family member(s) | | | Publication date (day/month/year) |
|---|---|---|---|---|---|---|---|
| CN | 102244572 | A | 16 November 2011 | WO | 2012151808 | A1 | 15 November 2012 |
| | | | | CN | 102244572 | B | 06 June 2017 |
| CN | 101351780 | A | 21 January 2009 | US | 2009168791 | A1 | 02 July 2009 |
| | | | | WO | 2007077739 | A1 | 12 July 2007 |
| | | | | JP | 4970284 | B2 | 04 July 2012 |
| | | | | US | 8477789 | B2 | 02 July 2013 |
| | | | | CN | 101351780 | B | 11 April 2012 |
| CN | 101529404 | A | 09 September 2009 | EP | 2064628 | A4 | 26 October 2011 |
| | | | | CN | 101529404 | B | 18 July 2012 |
| | | | | US | 8160084 | B2 | 17 April 2012 |
| | | | | EP | 2064628 | B1 | 19 April 2017 |
| | | | | WO | 2008035167 | A2 | 27 March 2008 |
| | | | | TW | I430101 | B | 11 March 2014 |
| | | | | WO | 2008035167 | A3 | 07 August 2008 |
| | | | | EP | 2064628 | A2 | 03 June 2009 |
| | | | | US | 2008075015 | A1 | 27 March 2008 |
| | | | | TW | 200832142 | A | 01 August 2008 |
| | | | | KR | 101054109 | B1 | 03 August 2011 |
| | | | | KR | 20090054478 | A | 29 May 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811533615